(19) **Europäisches Patentamt / European Patent Office / Office européen des brevets**

(11) **EP 1 785 428 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(21) Anmeldenummer: **06123650.1**

(22) Anmeldetag: **08.11.2006**

(51) Int Cl.:
*C07F 7/00* (2006.01)  *C07F 11/00* (2006.01)
*C07F 9/00* (2006.01)  *C07F 5/06* (2006.01)
*C07F 19/00* (2006.01)  *B01J 31/14* (2006.01)
*B01J 20/22* (2006.01)  *C09F 9/00* (2006.01)

(54) **Dotierte metallorganische Gerüstmaterialien**

Doped metal organic framework materials

Matériaux supports organométalliques dotés

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.11.2005 DE 102005053430**

(43) Veröffentlichungstag der Anmeldung:
**16.05.2007 Patentblatt 2007/20**

(73) Patentinhaber: **BASF SE**
**67056 Ludwigshafen (DE)**

(72) Erfinder:
• **Schubert, Markus**
**67063 Ludwigshafen (DE)**

• **Müller, Ulrich**
**67435, Neustadt (DE)**
• **Ruetz, Roger**
**68163, Mannheim (DE)**
• **Hatscher, Stephan**
**28857, Syke (DE)**

(74) Vertreter: **Isenbruck, Günter**
**Isenbruck Bösl Hörschler Wichmann Huhn LLP**
**Patentanwälte**
**Theodor-Heuss-Anlage 12**
**68165 Mannheim (DE)**

(56) Entgegenhaltungen:
**WO-A-20/05068474**

**Beschreibung**

Die vorliegende Erfindung betrifft poröse metallorganische Gerüstmaterialien, Formkörper diese enthaltend, Verfahren zur Herstellung der Gerüstmaterialien sowie deren Verwendung.

Poröse metallorganische Gerüstmaterialien stellen eine interessante Substanzklasse dar, die für vielfache Anwendungen von Interesse sind. Hierbei sind insbesondere die porösen Eigenschaften der Gerüstmaterialien im Blickpunkt, welche solche metallorganischen Gerüstmaterialien vielversprechend für technische Anwendungen wie die Speicherung und Trennung von Gasen oder für die heterogene Katalyse machen.

Die porösen metallorganischen Gerüstmaterialien enthalten typischerweise eine an ein Metallion koordinativ gebundene, mindestens zweizähnige organische Verbindung, die meist eine Di-, Tri- oder Tetracarbonsäure darstellt. Solche metallorganischen Gerüstmaterialien (MOF = metal organic framework) werden beispielsweise in US 5,648,508, EP-A-0 790 253, M. O-Keeffe et al., J. Sol. State Chem., 152 (2000), Seite 3 bis 20, H. Li et al., Nature 402, (1999), Seiten 276 bis 279, M. Eddaoudi et al., Topics in Catalysis 9, (1999), Seite 105 bis 111, B. Chen et al., Science 291, (2001), Seite 1021 bis 1023 und DE-A-101 11 230 beschrieben.

Es sind weiterhin in der jüngeren Literatur metallorganische Gerüstmaterialien beschrieben, bei denen das Gerüst des Gerüstmaterials durch unterschiedliche Metalle aufgebaut ist. Sofern eines der Metalle in einem nicht stöchiometrischen Unterschuss vorliegt, kann von einer Dotierung gesprochen werden, sofern das eingebaute Metall das Grundgerüst, welches durch das erste Metall vorgegeben wird, in seiner Struktur nicht oder nur unwesentlich ändert. Hiervon sind Gerüstmaterialien zu unterscheiden, bei denen das Gerüst mit mehreren Metallen verschieden von denjenigen Gerüsten sind, die jeweils durch die einzelnen Metalle gebildet werden. Hierbei ist jedoch zu beachten, dass der Begriff "Dotierung" im Stand der Technik auch, in einer dem Fachmann eher ungeläufigen Weise, für die bloße Imprägnierung eines Gerüstmaterials mit einem Metallsalz verwendet wird. So beschreibt beispielsweise EP-B 1 070 538 die Imprägnierung eines Gerüstmaterials, welches aus Kupfer(II)- und 1,3,5-Benzoltricarbonsäure gebildet wird, durch Kupfer(II)chlorid.

Weiterhin sind Gerüstmaterialien im Stand der Technik beschrieben, bei denen das Gerüst durch zwei Metallionen sowie einem entsprechenden Liganden aufgebaut sind, wobei jedoch das im Überschuss vorliegende Metall ein Lanthanid darstellt. Aufgrund der hohen Komplexbildungsfähigkeit der Lanthanide ist die mögliche Erzeugung solcher Gerüstmaterialien nicht überraschend.

Y.J. Kim et al., Dalton Trans. 2005, 2603-2609, beschreiben zweidimensionale verbrückte Netzwerke aus Erbium(III)-Übergangsmetall (II)glutarat-Verbindungen.

M.-Y. Xu et al., Inorganic Chemistry Communications 6 (2003), 841-844, beschreiben stabile Gerüstmaterialien, welche Erbium und Kupfer enthalten.

Dreidimensionale Gadolinium- und Dysposium-Gerüstmaterialien, die weiterhin Nickel oder Kobalt enthalten, sind bei Q. Yue et al., Inorg. Chem. 44 (2005), 5241-5246, beschrieben.

G. Swarnabala et al., Inorg. Chem. 37 (1998), 1483-1485, beschreiben eindimensionale Kondensationspolymere mit alternierenden Cer- und Calciumpolyeder.

Gerüstmaterialien, bei denen in ihren Eigenschaften sehr ähnliche Übergangsmetalle verwendet werden, sind beispielsweise in Inorganica Chemica Acta 314(2001), 163-171, und Solid State Sciences 6 (2004), 579-591, beschrieben.

Neben Gerüstmaterialien, die sich insbesondere durch eine vergleichbare Porenverteilung ausweisen und entsprechend vergleichbare Eigenschaften besitzen, existieren jedoch im Stand der Technik ebenso Gerüstmaterialien, die durch besondere Eigenschaften auffallen.

Eines dieser Gerüstmaterialien ist ein auf Aluminium basiertes Gerüstmaterial. So beschreiben T. Loiseau et al., Chem. Eur. J. 10 (2004), 1373-1382, ein poröses Aluminiumterephthalat, welches sich durch eine hohe thermische Stabilität auszeichnet.

Obwohl es zahlreiche Publikationen zu metallorganischen Gerüstmaterialien gibt, besteht nach wie vor ein Bedarf an weiter modifizierten porösen metallorganischen Gerüstmaterialien, die die bereits vorhandenen ausgezeichneten Eigenschaften der Gerüstmaterialien weiter verbessern oder derart modifizieren, dass diese für bestimmte Anwendungsgebiete besonders geeignet sind.

Eine Aufgabe der vorliegenden Erfindung ist somit die Bereitstellung eines metallorganischen Gerüstmaterials, das durch gezielte Modifizierung verbesserte Eigenschaften in an sich bekannten Anwendungsgebieten für poröse metallorganische Gerüstmaterialien aufweist.

Die Aufgabe wird gelöst durch ein poröses metallorganisches Gerüstmaterial enthaltend eine Gerüststruktur, die aus einem ersten Metallion $M_1$ ausgewählt aus der Gruppe bestehend aus $Al^{III}$, $V^{III/IV}$, $Cr^{III}$, $Fe^{III}$, $Ga^{III}$ und $In^{III}$ und mindestens einer koordinativ an $M_1$ gebundenen mindestens zweizähnigen organischen Verbindung L aufgebaut ist, wobei teilweise $M_1$ und/oder L in der Gerüststruktur durch mindestens ein Metallion $M_2$ ausgetauscht sind/ist wobei $M_2$ in nicht-stöchiometrischer Menge vorliegt.

Es wurde nämlich überraschenderweise gefunden, dass bei Verwendung der oben angegebenen Metallionen $M_1$ ein metallorganisches Gerüstmaterial aufgebaut werden kann, das weiterhin ein Metallion $M_2$ enthalten kann. Hierbei weisen überraschenderweise die erhaltenen Gerüstmaterialien typische Merkmale auf, wie dies für die reinen $M_1$-Gerüstmaterialien gilt.

Hierbei kann insbesondere im Falle des Aluminiums ein Gerüstmaterial erhalten werden, das typische Eigenschaften des Al-Gerüstmaterials aufweist. Hierbei sind zu nennen die ungewöhnliche thermische Stabilität, die gute Stabilität gegenüber Wasser, Säuren und Laugen, die lewissauren Eigenschaften von Aluminium Verbindungen im Generellen sowie die ungewöhnliche Al-O-Al-Verbrückung trotz des prinzipiellen Aufbaus durch die mindestens zweizähnige organische Verbindung.

Es wurde insbesondere überraschend festgestellt, dass in einigen Fällen durch das Vorhandensein des zweiten Metallions $M_2$ nicht nur Plätze in der Gerüststruktur des metallorganischen Gerüstmaterials von diesen besetzt werden, in denen normalerweise das $M_1$-Ion sitzt, sondern vielmehr, insbesondere bei Aluminium, auch die mindestens zweizähnige organische Verbindung durch $M_2$ ersetzt sein kann.

Dies könnte daran liegen, dass beispielsweise bei einer Dicarbonsäure wie Terephthalsäure, als mindestens zweizähnige organische Verbindung die Teilstruktur Al-OC(O)-Ph-C(O)-O-Al durch Al-(O-$M_2$)$_n$-O-Al (n = 1 oder ein Vielfaches) ersetzt wird.

Diese erstaunliche Entdeckung kann dahingehend technisch genutzt werden, dass der Anteil an $M_2$ im metallorganischen Gerüstmaterial erhöht werden kann, ohne dass im Wesentlichen der Anteil von $M_1$, wie Aluminium, im Gerüstmaterial verringert wird. Dies ist insbesondere für diejenigen Anwendungen von Interesse, bei denen das Metallion $M_2$ eine besondere Rolle spielt. Beispielsweise kann dieses Metall $M_2$ als Katalysator wirken und die Erhöhung des Gehalts an $M_2$ im metallorganischen Gerüstmaterial könnte zu einer verbesserten katalytischen Eigenschaft beitragen, ohne dass das $M_1$-Gerüst, das beispielsweise für eine entsprechende thermische Stabilität notwendig sein kann, substantiell verändert würde.

Neben dem dreiwertigen Aluminium können im Rahmen der vorliegenden Erfindung als Metallion $M_1$ die dreiwertigen homologen Gallium und Indium sowie die vergleichbaren Ionen des Vanadiums, Chroms und Eisens eingesetzt werden. Die Isotypie zwischen Aluminium sowie Chrom und Vanadium ist beispielsweise in T. Loiseau et al., Chem. Eur. J. 10 (2004), 1373-1382, beschrieben. Die enge Verwandtschaft von $V^{III}$ und $V^{IV}$ im Zusammenhang mit Gerüstmaterialien ist beispielsweise bei K. Barthelet et al., Angew. Chem. 114 (2002), 291-294, beschrieben.

Wie bereits erwähnt, ist Aluminium als $M_1$ besonders bevorzugt.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei, bevorzugt zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: OH, SH, $NH_2$, NH(-R-H), N(R-H)$_2$, $CH_2OH$, $CH_2SH$, $CH_2NH_2$, $CH_2NH$(-R-H), $CH_2N$(-R-H)$_2$, -$CO_2H$, COSH, -$CS_2H$, -$NO_2$, -$B(OH)_2$, -$SO_3H$, -$Si(OH)_3$, -$Ge(OH)_3$, -$Sn(OH)_3$, -$Si(SH)_4$, -$Ge(SH)_4$, -$Sn(SH)_3$, -$PO_3H_2$, -$AsO_3H$, -$AsO_4H$, -$P(SH)_3$, -$As(SH)_3$, -$CH(RSH)_2$, -$C(RSH)_3$, -$CH(RNH_2)_2$, -$C(RNH_2)_3$, -$CH(ROH)_2$, -$C(ROH)_3$, -$CH(RCN)_2$, - $C(RCN)_3$, wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 $C_6$-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -$CH(SH)_2$, -$C(SH)_3$, -$CH(NH_2)_2$, $CH(NH(R-H))_2$, $CH(N(R-H)_2)_2$, $C(NH(R-H))_3$, $C(N(R-H)_2)_3$, -$C(NH_2)_3$, -$CH(OH)_2$, -$C(OH)_3$, -$CH(CN)_2$, -$C(CN)_3$ zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 18, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, bevorzugt N, O und/oder S enthalten. Weiter bevorzugt enthält die aromatische Verbindung oder der aromatische Teil der sowohl aromatischen als auch aliphatischen Verbindung einen oder zwei $C_6$-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Besonders bevorzugt leitet sich die mindestens zweizähnige organische Verbindung L von einer Di-, Tri-, oder Tetracarbonsäure oder deren Schwefelanaloga ab. Schwefelanaloga sind die funktionellen Gruppen -C(=O)SH sowie dessen Tautomer und C(=S)SH, die anstelle einer oder mehrerer Carbonsäuregruppen eingesetzt werden können.

Der Begriff "ableiten" bedeutet im Rahmen der vorliegenden Erfindung, dass L im Gerüstmaterial in teilweise deprotonierter oder vollständig deprotonierter Form vorliegen kann. Weiterhin kann L weitere Substituenten enthalten, wie beispielsweise -OH, -NH$_2$, -OCH$_3$, -CH$_3$, -NH(CH$_3$), -N(CH$_3$)$_2$, -CN sowie Halogenide.

Mehr bevorzugt ist L ein aliphatischer oder aromatischer acyclischer oder cyclischer Kohlenwasserstoff mit 1 bis 18 Kohlenstoffatomen, der zudem ausschließlich mindestens zwei Carboxygruppen als funktionelle Gruppen aufweist.

Beispielsweise sind im Rahmen der vorliegenden Erfindung Dicarbonsäuren wie etwa

Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-dicarbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoyl-benzol-1,3-dicarbonsäure, 1,3-Dibenzyl-2-oxoimidazolidin-4,5-cis-dicarbonsäure, 2,2'-Bichinolin-4,4'-di-carbonsäure, Pyridin-3,4-dicarbonsäure, 3,6,9-Trioxaundecandicarbonsäure, Hydroxybenzophenon-dicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondiimiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalindicarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1 H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Dihydroxy-1,4-dicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Tricarbonsäuren wie etwa

2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1 H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon-+säure, 1,2,3-Propantricarbonsäure oder Aurintricarbonsäure,

oder Tetracarbonsäuren wie etwa 1,1-Dioxidperylo[1,12-BCD]thiophen-3,4,9,10-tetracarbonsäure, Perylentetracarbonsäuren wie Perylen-3,4,9,10-tetracarbonsäure oder oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure zu nennen.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Acetylendicarbonsäure (ADC), Campherdicarbonsäure, Fumarsäure, Bernsteinsäure, Benzoldicarbonsäuren, Naphthalindicarbonsäuren, Biphenyldicarbonsäuren wie beispielsweise 4,4'-Biphenyldicarbonsäure (BPDC), Pyrazindicarbonsäuren, wie 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem Isophtalsäure, Terephthalsäure, 2,5-Dihydroxyterephthalsäure, 1,2,3-Benzoltricarbonsäure, 1,3,5-Benzoltricarbonsäure, 2,6-Naphthalindicarbonsäure, 1,4-Naphthalindicarbonsäure, 1,2,3,4- und 1,2,4,5-Benzoltetracarbonsäure, Campherdicarbonsäure oder 2,2'-Bipyridin-5,5'-dicarbonsäure eingesetzt.

Das Metallion $M_2$ ist von $M_1$ verschieden in Bezug auf die Natur des Metalls und/oder dessen Oxidationsstufe. Vorzugsweise unterscheidet sich $M_2$ von $M_1$ in der Natur des Metalls (es weist damit eine zu $M_1$ verschiedene Ordnungzahl im Periodensystem der Elemente auf) und unterscheidet sich zudem vorzugsweise auch in der Oxidationsstufe voneinander. $M_2$ ist vorzugsweise ausgewählt aus den Gruppen 2 bis 15 (1a - 7a, 8, 1 B-5B) des Periodensystems der Elemente sowie den Lanthaniden.

Besonders bevorzugt ist $M_2$, ein Ion von Mg, Ca, Sn, Ti, Zr, V, Mo, W, Re, Mn, Fe oder der Lanthanide.

Vorzugsweise ist das Verhältnis der molaren Menge $M_2$ zur Summe der Menge $M_1$ und

$$M_2 \quad \left(\frac{M_2}{M_1 + M_2}\right) < 50\%.$$

$M_2$ liegt in nicht-stöchiometrischer Menge vor.

Die metallorganischen Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1985), 603-609, Seite 71, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell gemäß DIN 66135 (DIN 66131, 66134) für ein metallorganisches Gerüstmaterial in Pulverform mehr als 5 $m^2/g$, mehr bevorzugt über 10 $m^2/g$, mehr bevorzugt mehr als 50 $m^2/g$, weiter mehr bevorzugt mehr als 500 $m^2/g$, weiter mehr bevorzugt mehr als 1000 $m^2/g$ und besonders bevorzugt mehr als 1250 $m^2/g$.

MOF Formkörper können eine niedrigere spezifische Oberfläche besitzen; vorzugsweise jedoch mehr als 10 $m^2/g$, mehr bevorzugt mehr als 50 $m^2/g$, weiter mehr bevorzugt mehr als 500 $m^2/g$.

Die Porengröße des metallorganischen Gerüstmaterials kann durch Wahl des geeigneten Liganden und/oder der mindestens zweizähnigen organischen Verbindung gesteuert werden. Häufig gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 9 nm bezogen auf das kristalline Material.

In einem MOF-Formkörper treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich bis zu 10 nm liegen. Die Porenverteilung kann mittels Quecksilber-Porosimetrie bestimmt werden.

Das metallorganische Gerüstmaterial kann pulverförmig beziehungsweise als Agglomerat vorliegen. Das Gerüstmaterial kann als solches verwendet werden oder es wird in einen Formkörper umgewandelt. Demgemäß ist ein weiterer Aspekt der vorliegenden Erfindung ein Formkörper enthaltend ein erfindungsgemäßes Gerüstmaterial.

Bevorzugte Verfahren zur Herstellung von Formkörpern sind hierbei die Verstrangung oder Tablettierung. Bei der Formkörperherstellung kann das Gerüstmaterial weitere Materialien, wie beispielsweise Binder, Gleitmittel oder andere Additive aufweisen, welche während der Herstellung hinzugesetzt werden. Ebenso ist es denkbar, dass das Gerüstmaterial weitere Bestandteile aufweist, wie zum Beispiel Absorbentien wie Aktivkohle oder dergleichen.

Hinsichtlich der möglichen Geometrien der Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:

- Kneten/Kollern des Gerüstmaterials allein oder zusammen mit mindestens einem Bindemittel und/oder mindestens einem Anteigungsmittel und/oder mindestens
  einer Templatverbindung unter Erhalt eines Gemisches; Verformen des erhaltenen Gemisches mittels mindestens einer geeigneten Methode wie beispielsweise Extrudieren; Optional Waschen und/oder Trocknen und/oder Calcinieren des Extrudates; Optional Konfektionieren.

- Tablettieren zusammen mit mindestens einem Bindemittel und/oder anderem Hilfsstoff.

- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.

- Aufbringen des Gerüstmaterials auf mindestens ein gegebenenfalls poröses Substrat.

Kneten/Kollern und Verformen kann gemäß eines jeden geeigneten Verfahrens erfolgen, wie beispielsweise in Ullmanns Enzyklopädie der Technischen Chemie, 4. Auflage, Band 2, S. 313 ff. (1972) beschrieben.

Beispielsweise kann das Kneten/Kollern und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders bevorzugt werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran und/oder ein Polyethylenoxid eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 500 °C, bevorzugt im Bereich von 50 bis 500 °C und besonders bevorzugt im Bereich von 100 bis 350 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Ein weiterer Gegenstand der vorliegenden Erfindung ist ein Verfahren zur Herstellung eines erfindungsgemäßen Gerüstmaterials die Schritte umfassend

- Inkontaktbringen des Metallions $M_1$ und zumindest des Metallions $M_2$ in Form ihrer Salze, oxide oder Alkoholate mit der organischen Verbindung L unter gegebenenfalls deprotonierenden Bedingungen und

- Isolierung des Gerüstmaterials.

Geeignete Alkoholate sind beispielsweise Methanolate, Ethanolate, Proponolate.

Vorzugsweise findet das erfindungsgemäße Verfahren zur Herstellung der Gerüstmaterialien gemäß der vorliegenden Erfindung in organischen Lösemitteln bei Temperaturen statt, die höchstens dem Siedepunkt des eingesetzten Lösemittels unter Normalbedingungen entspricht. Dementsprechend findet die Herstellung unter Normaldruck statt.

Ein weiterer Gegenstand der vorliegenden Erfindung ist die Verwendung eines erfindungsgemäßen Gerüstmaterials als Lewis-Säure, Adsorbens, Ionenaustauscher oder in der Katalyse.

## Beispiele

Beispiel 1 Herstellung/Charakterisierung eines Ti-dotierten Al-BDC-MOFs - Ersatz von Al und/oder Linkermolekülen durch Fremdatome

10,21 g Aluminiumtrüsopropylat, 6,8 g Tetrabutylortho-Titanat und 5,8 g Terephthalsäure werden in 100 g Wasser in einem Autoklavenbecher suspendiert und für 1 h gerührt. Das Reaktionsgemisch wird anschließend 96 h bei 220 °C in einem Berghoff-Autoklaven ("Teflon-Liner") gehalten. Nach dem Abkühlen wird der Feststoff abfiltriert, mit DMF gewaschen und 3 Tage lang in einem Muffelofen (100 l/h Luft) bei 330 °C nachbehandelt (Aufheizen mit ca. 75 °C/h). Es werden 9,2 g eines Ti-dotierten Al-BDC-MOFs erhalten mit einer Oberfläche von 1060 m$^2$/g (nach Langmuir).

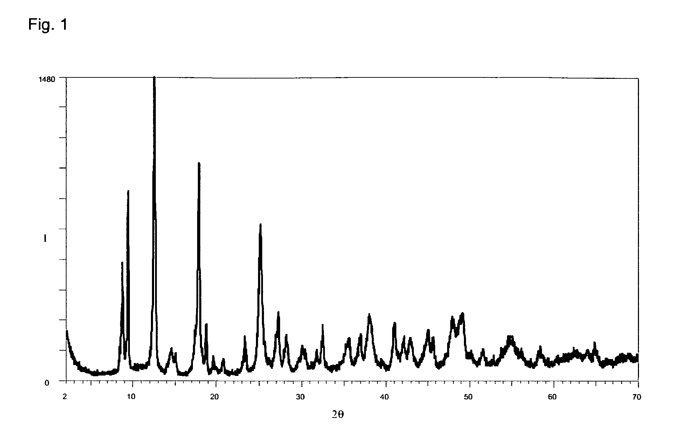

Die chemische Analyse zeigt ein Al-Ti-Verhältnis von 2,4 : 1 in der Gerüststruktur. Abbildung 1 zeigt das XRD, wobei in dieser sowie in den anderen Abbildungen, die ein XRD zeigen, die Intensität I (Lion (Counts)) als Funktion der 2-Theta-Skala (2θ) dargestellt ist. Das Diffraktogramm ist dem eines Al-BDC-MOFs sehr ähnlich. Es ist keine TiO$_2$-Phase nachzuweisen. Das ist ein klarer Hinweis auf den tatsächlichen Einbau von Ti in das Al-BDC-Gitter.

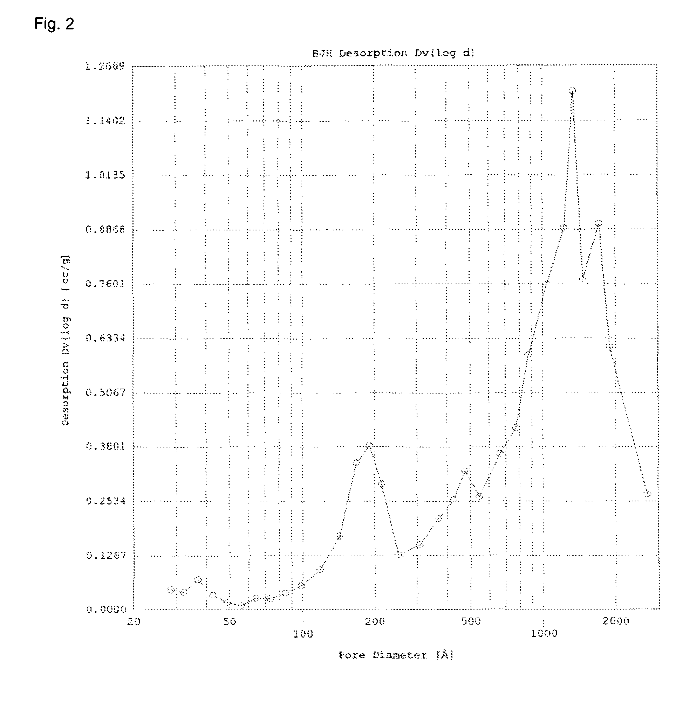

Die Porenverteilung des Gerüstmaterials ist in Abbildung 2 gezeigt (Desorption Dv (log d) [cc/g] als Funktion des Porendurchmessers d in Å). Das Porenvolumen beträgt 0,97 ml/g.

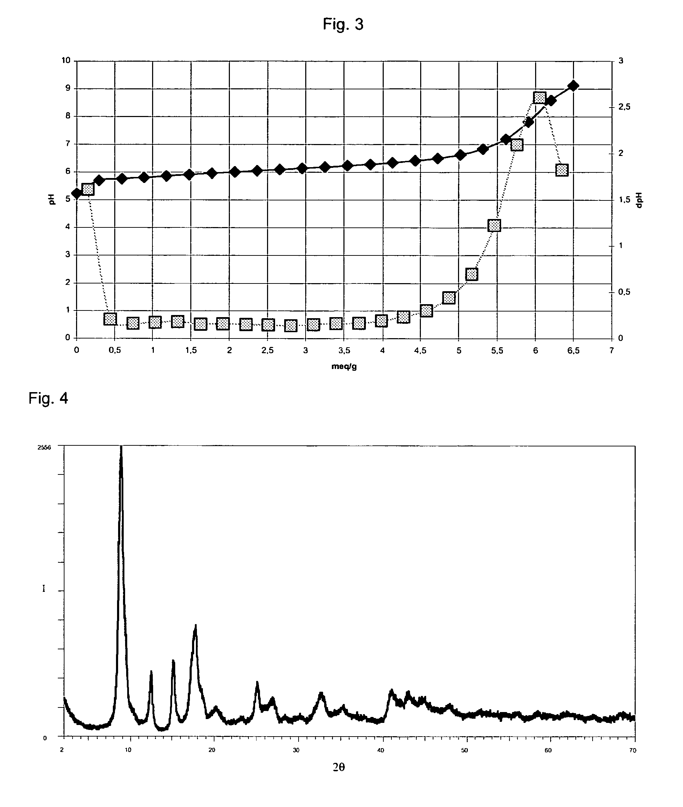

Die Titration mit NaOH in wäßrigem Medium ist in Abbildung 3 (obere Kurze pH, untere dpH) dargestellt. Aus dem Ergebnis kann das Vorhandensein einer großen Anzahl an schwach sauren Zentren abgeleitet werden.

Um zu überprüfen, ob das Ti in die Struktur eingebaut wurde oder als getrennte $TiO_2$-Phase vorliegt, wurde weiterhin ein Test zur Zersetzung von Wasserstoffperoxid in wässriger Lösung durchgeführt.

Hierzu wird einem Gemisch von 6,64 g 40%iger $H_2O_2$-Lösung mit 30 g Wasser bei 80 °C 500 mg des zu testenden Materials zugegeben. Nach jeweils festen Zeiten werden Proben gezogen und cerimetrisch auf den $H_2O_2$-Restgehalt titriert. Der Ti-dotierte MOF zeigt nur eine relativ geringe Aktivität für die $H_2O_2$-Zersetzung, was ein weiterer, deutlicher Hinweis auf den tatsächlichen Einbau der Ti-Atome in das Gitter und das Fehlen von $TiO_2$-Phasen ist.

Vergleichsbeispiel 2: undotierter Al-Terephthalsäure-MOF

466,5 g $Al_2(SO_4)_3$*18$H_2O$ und 398,7 g Terephthalsäure werden in 2000 ml DMF suspendiert und unter Rühren 24 h unter Rückfluß gekocht. Dabei fällt ein Niederschlag an, der abfiltriert und mit 3x400 ml DMF und 400 ml Methanol gewaschen wird. Das Pulver wird bei Raumtemperatur 96h lang vorgetrocknet und anschließend in einem Muffelofen bei 330°C 16 h lang an Luft kalziniert.

Das Röntgendiffraktogramm ist in Abb. 4 dargestellt. Die Elementaranalyse ergibt 12,6 Gew.-% Al und 45,0 Gew.-% C. Die Oberfläche wird mittels $N_2$-Sorption zu 1442 m²/g bestimmt (Langmuir-Oberfläche).

Vergleichsbeispiel 3: undotierter Al-BTC-MOF

29,4 g $AlCl_3$*6$H_2O$ und 15,6 g Benzoltricarbonsäure werden in 520,5 g DMF suspendiert und unter Rühren 4 Tage unter Rückfluß gekocht. Dabei fällt ein Niederschlag an, der abfiltriert und mit 2x1 00 ml DMF und 4x100 ml Methanol gewaschen wird. Das Pulver wird im Vakuumtrockenschrank 16 h lang bei 200°C vorgetrocknet und anschließend in einem Muffelofen bei 330°C 72h lang an Luft kalziniert.

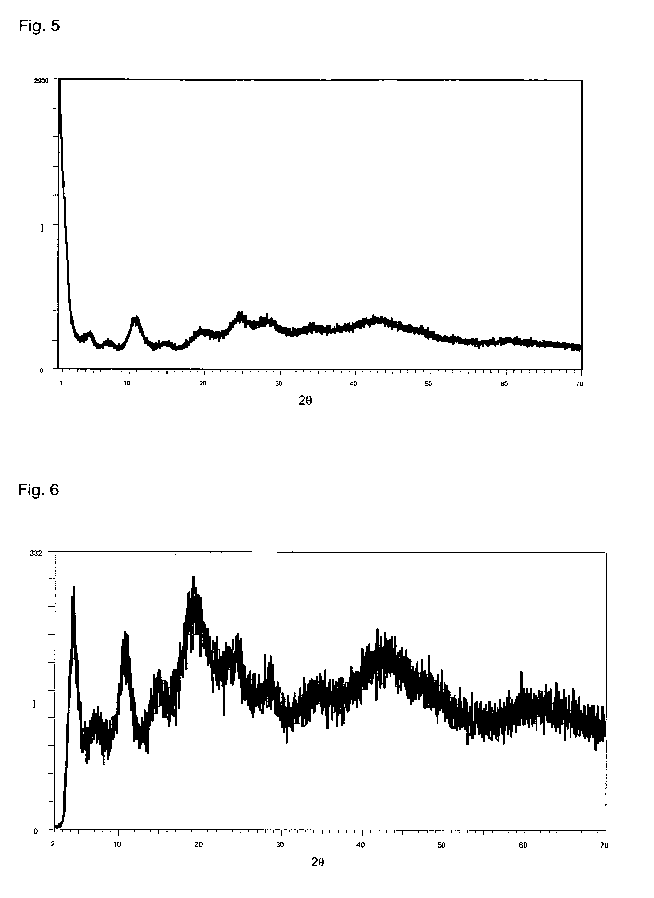

Das Röntgendiffraktogramm ist in Abb. 5 dargestellt. Die Elementaranalyse ergibt 15,0 Gew.-% Al und 33,6 Gew.-% C. Die Oberfläche wird mittels $N_2$-Sorption zu 1914 m²/g bestimmt (Langmuir-Oberfläche).

Beispiel 4 Herstellung/Charakterisierung eines V-dotierten Al-BTC-MOFs

28 g $AlCl_3$*6$H_2O$, 15,6 g Benzoltricarbonsäure (BTC) und 0,96 g $VCl_3$ werden in 520,5 g DMF suspendiert und 24 h bei 130 °C in einem Glaskolben gerührt. Der Niederschlag wird mit 2 x 100 ml DMF und 4 x 100 ml Methanol gewaschen und 16 h im Vakuumtrockenschrank bei 200 °C vorgetrocknet. Abschließend wird 72 h bei 330 °C an Luft (100 l/h) calciniert.

Es wird ein Pulver mit einer Oberfläche von 1604 m²/g ($N_2$-Sorption nach Langmuir) erhalten. Das XRD ist in Abb. 6 dargestellt. Die Elementaranalyse zeigt 0,72 Gew.-% V und 20,5 Gew.-% Al. Das molare Verhältnis Al :V beträgt ca. 50:1.

Beispiel 5 *Ersatz von Al durch Fremdatom:* Al-Mg-BTC-MOF

5 g $AlCl_3$*6$H_2O$, 1,05 g $MgCl_2$*6$H_2O$ und 2,9 g Benzoltricarbonsäure werden in 300 ml DMF suspendiert und unter Rühren 16 h unter Rückfluss gekocht. Dabei fällt ein Niederschlag an, der abfiltriert und mit 3x50 ml DMF und 4x50 ml Methanol gewaschen wird. Das Pulver wird im Vakuumtrockenschrank 21 h bei 150°C vorgetrocknet und anschließend in einem Muffelofen bei 330°C 48 h lang an Luft calciniert.

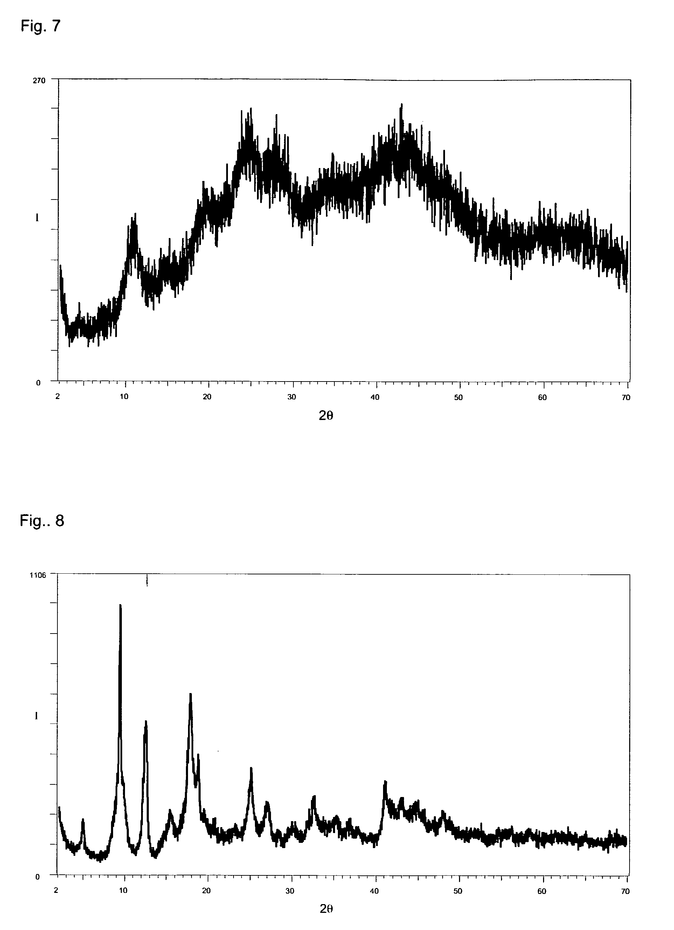

Das Röntgendiffraktogramm entspricht dem eines reinen Al-BTC-MOFs (Abb. 7). Es sind keine neuen Reflexe zu erkennen. Die Elementaranalyse ergibt 1,3 Gew.-% Mg, 13,7 Gew.-% Al und 33,6 Gew.-% C. Das molare Al : Mg-Verhältnis ist ca. 9:1. Die Oberfläche wird mittels $N_2$-Sorption zu 1246 m²/g bestimmt (Langmuir-Oberfläche).

Beispiel 6: *Ersatz von Al durch Fremdatom:* Al-Mg-BDC-MOF

5 g $AlCl_3$*6$H_2O$, 0,47 g $MgCl_2$*6$H_2O$ und 7,88 g Terephthalsäure werden in 300 ml DMF suspendiert und unter Rühren 16 h unter Rückfluss gekocht. Dabei fällt ein Niederschlag an, der abfiltriert und mit 3x50 ml DMF und 4x50 ml Methanol gewaschen wird. Das Pulver wird im Vakuumtrockenschrank 21 h bei 150°C vorgetrocknet und anschließend in einem Muffelofen bei 330°C 48 h lang an Luft calciniert.

Das Röntgendiffraktogramm entspricht dem eines reinen Al-BDC-MOFs (Abb. 8). Es sind keine neuen Reflexe zu erkennen. Die Elementaranalyse ergibt 0,7 Gew.-% Mg, 11,6 Gew.-% Al und 44,0 Gew.-% C. Das molare Al:Mg-Verhältnis ist ca. 15:1. Die Oberfläche wird mittels $N_2$-Sorption zu 1477 m²/g bestimmt (Langmuir-Oberfläche).

Beispiel 7 *Ersatz von Al durch Fremdatom:* Al-Zr-BTC-MOF

Elementaranalyse 10 % Zr, 11,8 % Al, 33,4 % C. (Al:Zr = 4:1)
5 g $AlCl_3$*6$H_2O$, 1,69 g $ZrOCl_2$*2$H_2O$ und 3,63 g Benzoltricarbonsäure werden in 300 ml DMF suspendiert und unter Rühren 16 h unter Rückfluss gekocht. Dabei fällt ein Niederschlag an, der abfiltriert und mit 3x50 ml DMF und 4x50 ml Methanol gewaschen wird. Das Pulver wird im Vakuumtrockenschrank 68 h bei 200°C vorgetrocknet und anschließend in einem Muffelofen bei 330°C 48 h lang an Luft calciniert.

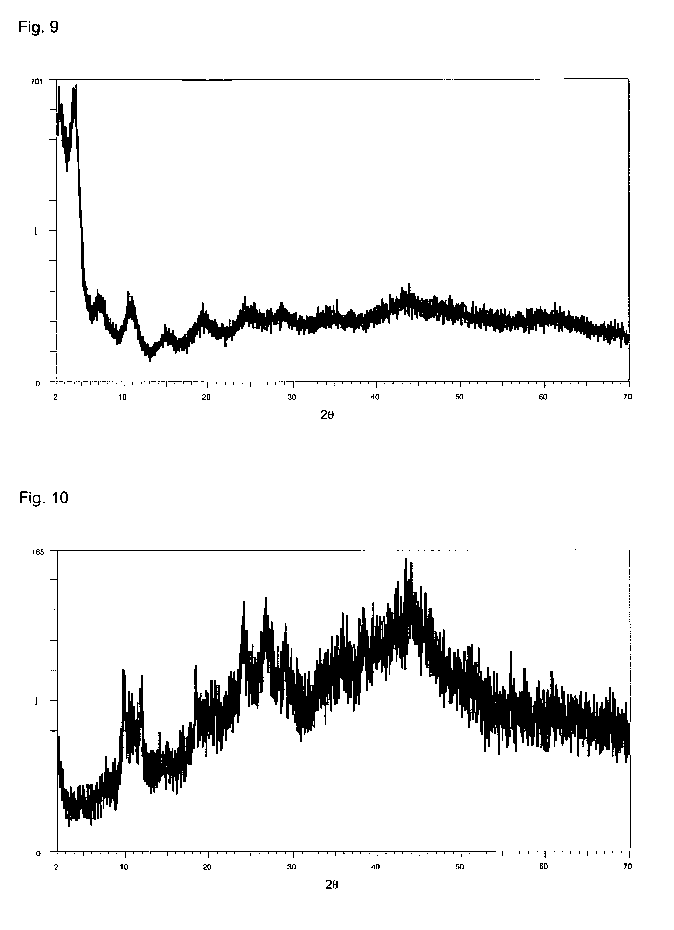

Das Röntgendiffraktogramm entspricht dem eines reinen Al-BTC-MOFs (Abb. 9). Es sind keine neuen Reflexe zu erkennen. Die Elementaranalyse ergibt 10,0 Gew.-% Zr, 11,8 Gew.-% Al und 33,4 Gew.-% C. Das molare Al:Zr-Verhältnis ist ca. 4:1. Die Oberfläche wird mittels $N_2$-Sorption zu 1809 $m^2$/g bestimmt (Langmuir-Oberfläche).

Beispiel 8 *Ersatz von Al durch Fremdatom:* Al-La-BTC-MOF

5 g $AlCl_3$*6$H_2O$, 2,24 g $La(NO_3)_3$*6$H_2O$ und 3,26 g Benzoltricarbonsäure werden in 300 ml DMF suspendiert und unter Rühren 16 h unter Rückfluss gekocht. Dabei fällt ein Niederschlag an, der abfiltriert und mit 3x50 ml DMF und 4x50 ml Methanol gewaschen wird. Das Pulver wird im Vakuumtrockenschrank 68 h bei 200°C vorgetrocknet und anschließend in einem Muffelofen bei 330°C 48 h lang an Luft calciniert.

Das Röntgendiffraktogramm entspricht dem eines reinen Al-BTC-MOFs (Abb. 10). Es sind keine neuen Reflexe zu erkennen. Die Elementaranalyse ergibt 8,2 Gew.-% La, 13,0 Gew.-% Al und 32,7 Gew.-% C. Das molare Al:La-Verhältnis ist ca. 11:1. Die Oberfläche wird mittels $N_2$-Sorption zu 1431 $m^2$/g bestimmt (Langmuir-Oberfläche).

Beispiel 9 *Ersatz von Al durch Fremdatom:* Al-Mo-BTC-MOF

5 g $AlCl_3$*6$H_2O$, 1,41 g $MoCl_5$ und 3,99 g Benzoltricarbonsäure werden in 300 ml DMF suspendiert und unter Rühren 17 h unter Rückfluss gekocht. Dabei fällt ein Niederschlag an, der abfiltriert und mit 3x50 ml DMF und 4x50 ml Methanol gewaschen wird. Das Pulver wird im Vakuumtrockenschrank 24 h bei 200°C vorgetrocknet (erhaltene Menge 4,42 g) und anschließend in einem Muffelofen bei 330°C 96 h lang an Luft calciniert.

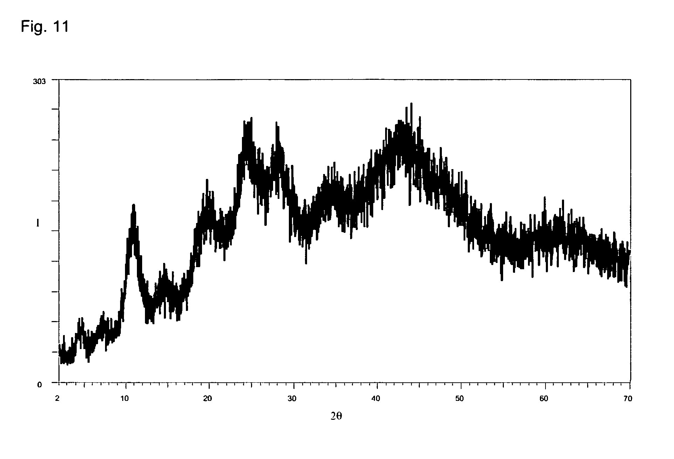

Das Röntgendiffraktogramm entspricht dem eines reinen Al-BTC-MOFs (Abb. 11). Es sind keine neuen Reflexe zu erkennen. Die Elementaranalyse ergibt 1,0 Gew.-% Mo, 11,2 Gew.-% Al und 33 Gew.-% C. Das molare Al:La-Verhältnis ist ca. 40:1. Die Oberfläche wird mittels $N_2$-Sorption zu 1754 $m^2$/g bestimmt (Langmuir-Oberfläche).

**Patentansprüche**

1. Poröses metallorganisches Gerüstmaterial enthaltend eine Gerüststruktur, die aus einem ersten Metallion $M_1$ ausgewählt aus der Gruppe bestehend aus $Al^{III}$, $V^{III/IV}$, $Cr^{III}$, $Fe^{III}$, $Ga^{III}$ und $In^{III}$ und mindestens einer koordinativ an $M_1$ gebundenen mindestens zweizähnigen organischen Verbindung L aufgebaut ist, wobei teilweise $M_1$ und/oder L in der Gerüststruktur durch mindestens ein Metall $M_2$ ausgetauscht sind/ist und wobei $M_2$ in nicht-stöchiometrischer Menge vorliegt.

2. Gerüstmaterial nach Anspruch 1, **dadurch gekennzeichnet, dass** $M_1$ $Al^{III}$ ist.

3. Gerüstmaterial nach Anspruch 1 oder 2, **dadurch gekennzeichnet, dass** L sich von einer Di-, Tri- oder Tetracarbonsäure oder Schwefel-Analoga davon ableitet.

4. Gerüstmaterial nach einem der Ansprüche 1 bis 3, **dadurch gekennzeichnet, dass** L ein aliphatischer oder aromatischer acyclischer oder cyclischer Kohlenwasserstoff mit 1 bis 18 Kohlenstoffatomen ist, der zudem ausschließlich mindestens zwei Carboxygruppen als funktionelle Gruppen aufweist.

5. Gerüstmaterial nach einem der Ansprüche 1 bis 4, **dadurch gekennzeichnet, dass** $M_2$ das Ion eines Metalls ausgewählt aus den Gruppen 2 bis 15 des Periodensystems der Elemente und den Lanthaniden ist.

6. Gerüstmaterial nach Anspruch 5, **dadurch gekennzeichnet, dass** $M_2$ ein Ion von Mg, Ca, Sn, Ti, Zr, V, Mo, W, Re, Mn, Fe oder Lanthanide ist.

7. Gerüstmaterial nach einem der Ansprüche 1 bis 6, **dadurch gekennzeichnet, dass** das Verhältnis der molaren Menge $M_2$ zur Summe der Mengen $M_1$ und $M_2$ < 50 % ist.

8. Formkörper enthaltend ein Gerüstmaterial nach einem der Ansprüche 1 bis 7.

9. Verfahren zur Herstellung eines Gerüstmaterials nach einem der Ansprüche 1 bis 7, die Schritte umfassend

   - Inkontaktbringen des Metallions $M_1$ und zumindest eines Metallions $M_2$ in Form ihrer Salze, Oxide oder Alkoholate mit der organischen Verbindung L unter gegebenenfalls deprotonierenden Bedingungen und
   - Isolierung des Gerüstmaterials.

10. Verfahren zur Herstellung eines Gerüstmaterials nach Anspruch 9, wobei die Herstellung in organischen Lösemitteln bei Temperaturen von höchstens dem Siedepunkt des Lösemittels unter Normalbedingungen abläuft.

11. Verwendung eines Gerüstmaterials nach einem der Ansprüche 1 bis 7 als LewisSäure, Adsorbens, Ionenaustauscher oder in der Katalyse.

## Claims

**1.** A porous metal organic framework comprising a framework structure made up of a first metal ion $M_1$ selected from the group consisting of $Al^{III}$, $V^{III/IV}$, $Cr^{III}$, $Fe^{III}$, $Ga^{III}$ and $In^{III}$ and at least one at least bidentate organic compound L coordinated to $M_1$, wherein $M_1$ and/or L in the framework structure are/is partly replaced by at least one metal $M_2$ and $M_2$ is present in a nonstoichiometric amount.

**2.** The framework according to claim 1, wherein $M_1$ is $Al^{III}$.

**3.** The framework according to claim 1 or 2, wherein L is derived from a dicarboxylic, tricarboxylic or tetracarboxylic acid or a sulfur analogue thereof.

**4.** The framework according to any of claims 1 to 3, wherein L is an aliphatic or aromatic acyclic or cyclic hydrocarbon which has from 1 to 18 carbon atoms and, in addition, has exclusively at least two carboxy groups as functional groups.

**5.** The framework according to any of claims 1 to 4, wherein $M_2$ is the ion of a metal selected from among groups 2 to 15 of the Periodic Table of the Elements and the lanthanides.

**6.** The framework according to claim 5, wherein $M_2$ is an ion of Mg, Ca, Sn, Ti, Zr, V, Mo, W, Re, Mn, Fe or a lanthanide.

**7.** The framework according to any of claims 1 to 6, wherein the ratio of the molar amount of $M_2$ to the sum of the amounts of $M_1$ and $M_2$ is < 50%.

**8.** A shaped body comprising a framework according to any of claims 1 to 7.

**9.** A process for preparing a framework according to any of claims 1 to 7, which comprises the steps

> - contacting of the metal ion $M_1$ and at least one metal ion $M_2$ in the form of their salts, oxides or alkoxides with the organic compound L, optionally under deprotonating conditions, and
> - isolation of the framework.

**10.** The process for preparing a framework according to claim 9, wherein the preparation proceeds in organic solvents at temperatures of not more than the boiling point of the solvent under standard conditions.

**11.** The use of a framework according to any of claims 1 to 7 as Lewis acid, adsorbent, ion exchanger or in catalysis.

## Revendications

**1.** Matériau de squelette métallo-organique poreux qui contient une structure de squelette constituée d'un premier ion métallique $M_1$ choisi dans le groupe constitué de $Al^{III}$, $V^{III/IV}$, $Cr^{III}$, $Fe^{III}$, $Ga^{III}$ et $In^{III}$ et d'au moins un composé organique L au moins bidentate relié par coordination à $M_1$, dans lequel $M_1$ et/ou L sont remplacés partiellement dans la structure de squelette par au moins un métal $M_2$ et dans lequel $M_2$ est présent en quantité non stochiométrique.

**2.** Matériau de squelette selon la revendication 1, **caractérisé en ce que** $M_1$ est $Al^{III}$.

**3.** Matériau de squelette selon la revendication 1 ou 2, **caractérisé en ce** L dérive d'un acide di-, tri- ou tétracarboxylique ou d'analogues soufrés.

**4.** Matériau de squelette selon l'une quelconque des revendications 1 à 3, **caractérisé en ce** L est un hydrocarbure aliphatique ou aromatique, acyclique ou cyclique, ayant 1 à 18 atomes de carbone, qui comprend en outre exclusivement au moins deux groupes carboxy en tant que groupes fonctionnels.

**5.** Matériau de squelette selon l'une quelconque des revendications 1 à 4, **caractérisé en ce** $M_2$ est l'ion d'un métal choisi dans les groupes 2 à 15 du tableau périodique des éléments et des lanthanides.

**6.** Matériau de squelette selon la revendication 5, **caractérisé en ce que** $M_2$ est un ion de Mg, Ca, Sn, Ti, Zr, V, Mo, W, Re, Mn, Fe ou de lanthanides.

**7.** Matériau de squelette selon l'une quelconque des revendications 1 à 6, **caractérisé en ce** le rapport entre la quantité molaire de $M_2$ et la somme des quantités de $M_1$ et $M_2$ est inférieur à 50 %.

**8.** Corps moulé contenant un matériau de squelette selon l'une quelconque des revendications 1 à 7.

**9.** Procédé de fabrication d'un matériau de squelette selon l'une quelconque des revendications 1 à 7, qui comprend les étapes consistant à :

> - mettre en contact l'ion métallique $M_1$ et au moins un ion métallique $M_2$ sous la forme de leurs sels, oxydes ou alcoolates avec le composé organique L en conditions éventuellement déprotonantes et
> - isoler le matériau de squelette.

**10.** Procédé de fabrication d'un matériau de squelette selon la revendication 9, dans lequel la fabrication est réalisée en solvants organiques à des températures d'au plus le point d'ébullition du solvant en con-

**EP 1 785 428 B1**

ditions normales.

**11.** Utilisation d'un matériau de squelette selon l'une quelconque des revendications 1 à 7 en tant qu'acide de Lewis, adsorbant, échangeur ionique ou en catalyse.

Fig. 1

EP 1 785 428 B1

Fig. 2

13

Fig. 3

Fig. 4

Fig. 5

Fig. 6

Fig. 7

Fig.. 8

Fig. 9

Fig. 10

Fig. 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5648508 A
- EP 0790253 A
- DE 10111230 A
- EP 1070538 B
- WO 9429408 A
- EP 0592050 A1
- WO 9413584 A
- JP 3037156 A
- EP 0102544 B1
- EP 0389041 A1
- EP 0200260 A1
- WO 9519222 A

### In der Beschreibung aufgeführte Nicht-Patentliteratur

- **M. O-KEEFFE et al.** *J. Sol. State Chem.,* 2000, vol. 152, 3-20
- **H. LI et al.** *Nature,* 1999, vol. 402, 276-279
- **M. EDDAOUDI et al.** *Topics in Catalysis,* 1999, vol. 9, 105-111
- **B. CHEN et al.** *Science,* 2001, vol. 291, 1021-1023
- **Y.J. KIM et al.** *Dalton Trans.,* 2005, 2603-2609
- **M.-Y. XU et al.** *Inorganic Chemistry Communications,* 2003, vol. 6, 841-844
- **Q. YUE et al.** *Inorg. Chem.,* 2005, vol. 44, 5241-5246
- **G. SWARNABALA et al.** *Inorg. Chem.,* 1998, vol. 37, 1483-1485
- *Inorganica Chemica Acta,* 2001, vol. 314, 163-171
- *Solid State Sciences,* 2004, vol. 6, 579-591
- **T. LOISEAU et al.** *Chem. Eur. J.,* 2004, vol. 10, 1373-1382
- **K. BARTHELET et al.** *Angew. Chem.,* 2002, vol. 114, 291-294
- *Pure & Applied Chem.,* 1985, vol. 57, 603-609
- Ullmanns Enzyklopädie der Technischen Chemie. 1972, vol. 2, 313 ff